# FASCICULE DE BREVET EUROPEEN

(11) **EP 0 526 783 B1**
(45) Date de publication et mention de la délivrance du brevet: **11.10.1995**
(21) Numéro de dépôt: 92112226.3
(22) Date de dépôt: 17.07.1992
(51) Int. Cl.: A61C 1/14, B23B 31/02

(54) **Dispositif de blocage d'un manche d'outil, tête de pièce à main pourvue de ce dispositif et pièce à main dentaire équipée d'une telle tête**
Werkzeugspannvorrichtung, mit dieser Vorrichtung ausgerüsteter Kopf für zahnärtzliches Handstück und mit diesem Kopf ausgerüstetes Handstück
Tool shaft blocking device, dental handpiece head provided with this device, and dental handpiece provided with such a head

(30) Priorité: 29.07.1991 FR 9109711
(43) Date de publication de la demande: 10.02.1993
(73) Titulaire: BIEN-AIR SA, CH-2504 Bienne (CH)
(72) Inventeur: Mosimann, David, CH-2503 Bienne (CH)
(74) Mandataire: Caron, Gérard

(56) Documents cités:
- CH-A- 664 516
- US-A- 4 575 338

## Description

La présente invention concerne un dispositif de blocage d'un manche d'outil, par exemple dans un rotor.

Elle concerne par ailleurs une tête de pièce à main pourvue d'un tel dispositif, ainsi qu'une pièce à main équipée d'une telle tête.

On connaît déjà, d'après notamment le brevet CH 664 516, un dispositif permettant le blocage d'un manche d'outil dans un rotor de pièce à main, ce dispositif comportant deux bagues de serrage qui sont logées à l'intérieur d'un arbre creux fixé au rotor. Cet arbre a notamment pour fonction de transmettre au manche de l'outil le mouvement moteur fournit par une turbine à air ménagée sur le rotor.

Les deux bagues de serrage sont aussi logées à l'intérieur d'une coulisse tubulaire qui est conformée pour pouvoir se translater à l'intérieur dudit arbre et oui est sollicitée axialement par un ressort hélicoïdal de compression.

Ces deux bagues, grâce à des facettes ou méplats latéraux coopérant avec des jambes ménagées sur la coulisse, sont liées en rotation à l'arbre creux tout en étant susceptibles de pivoter à l'intérieur de celui-ci pour venir prendre au moins deux positions caractéristiques.

Dans une première position, dite de détente, les deux bagues, et plus particulièrement les alésages ménagés respectivement dans celles-ci sont disposés coaxialement à l'axe longitudinal de l'arbre creux, axe qui est confondu avec l'axe de rotation du rotor. Les deux bagues par l'intermédiaire de leur alésage peuvent donc dans cette première position recevoir le manche de l'outil. Cette position est obtenue en pressant axialement sur la coulisse, selon un premier sens d'actionnement.

Dans une seconde position, dite de blocage, qui est obtenue en relâchant la pression sur la coulisse, les deux bagues de serrage se positionnent de biais de sorte que leur axe longitudinal ne coïncide plus avec l'axe de cet arbre. Le maintien dans cette position est assuré essentiellement par l'action du ressort de rappel sur la coulisse, cette action étant orientée dans un second sens opposé au premier.

On obtient ainsi un blocage du manche de l'outil par arc-boutement.

Ce positionnement en biais des bagues de serrage est permis par un ensemble de surfaces radiales partiellement biseautées, ménagées en bout sur les deux bagues ainsi que sur la coulisse. De plus, l'arbre creux présente deux ouvertures radiales importantes recevant des régions périphériques des deux bagues de serrage et dont les parois forment des appuis qui coopèrent à la cinématique du dispositif.

Ce dispositif a tout d'abord l'avantage d'être autoserrant. De plus, il permet la disposition de bagues de serrage réalisées en un matériau dur et il ne présente pratiquement aucune usure. Ce dispositif est très efficace et il a rencontré un vif succès.

Toutefois, on comprend que, à cause des surfaces biseautées ménagées sur les deux bagues et sur la coulisse, il nécessite un usinage et un ajustement très précis.

De plus, les ouvertures radiales ménagées dans l'arbre creux diminuent considérablement sa résistance à la torsion et à la compression. Pour être maintenu fixement, cet arbre ne peut qu'être soudé sur le rotor, ce qui pose des problèmes délicats, à l'assemblage notamment à cause des dimensions très faibles du dispositif. La liaison par soudure présente aussi l'inconvénient d'être peu résistante aux efforts de cisaillement, ce qui diminue la fiabilité du dispositif qui est normalement destiné à transmettre des couples relativement élevés.

Par ailleurs, puisque le maintien des bagues de serrage dans la position de retenue du manche de l'outil est assuré essentiellement par le ressort hélicoïdal qui agit sur la coulisse, celui-ci doit présenter des caractéristiques importantes.

C'est la raison pour laquelle l'actionnement de la coulisse, généralement par l'intermédiaire d'un bouton poussoir, peut s'avérer difficile puisque cet actionnement nécessite de vaincre la force antagoniste du ressort, ajoutée à celle d'un second ressort de compression associé au bouton poussoir lui-même.

Cet inconvénient n'est pas négligeable lorsque l'on sait qu'un praticien doit changer l'outil de sa pièce à main à de nombreuses reprises lors d'une même opération. On observe une fatigue musculaire au niveau du pouce, préjudiciable à la précision et à la dextérité de ce praticien. Bien évidemment, l'effort important qu'il faut fournir est encore moins bien perçu lorsque c'est une assistante dentaire qui effectue les manipulations.

Ainsi, la présente invention a-t-elle pour but de fournir un dispositif de blocage d'une construction simple, facilement adaptable sur un rotor et qui ne nuise pas à sa résistance mécanique, nécessitant un minimum d'adjustement pour diminuer ses coûts de fabrication, et qui soit susceptible de s'affranchir d'un ressort de rappel puissant afin d'offrir une souplesse d'utilisation plus grande.

A cet effet, l'invention a pour objet un dispositif de blocage d'un manche d'outil, du type comprenant :
- un corps comportant un alésage longitudinal,
- un fourreau destiné à recevoir et à positionner le manche de l'outil par rapport audit corps, selon un premier axe, dit axe de Travail,
- un organe de serrage susceptible de se déplacer à l'intérieur dudit corps, cet organe comportant un logement conformé pour recevoir et bloquer le manche de l'outil,
- des moyens de guidage pour permettre le pivotement de l'organe de serrage autour d'au moins un deuxième axe, dit de pivotement, normal au premier et entre deux positions, une première dite de détente dans laquelle ledit organe peut recevoir et libérer ledit manche et une deuxième, dite de serrage, dans laquelle cet organe maintient fixement le manche par arc-boutement,
- des moyens d'entraînement associés audit organe de serrage pour la transmission d'un mouvement, tel qu'un mouvement de rotation, depuis ledit corps vers ledit organe,
- des premiers et des seconds moyens d'appui et de contre-appui associés audit organe pour piloter son pivotement vers les deux positions respectivement de détente et de serrage du manche,
- des moyens de commande du déplacement de l'organe de serrage vers sa position de détente pour permettre la libération et l'introduction du manche de l'outil à l'intérieur dudit fourreau, et
- des moyens de rappel agissant sur l'organe de serrage pour le ramener vers sa position de serrage, caractérisé en ce que les premiers et les seconds moyens d'appui et de contre-appui sont logés intégralement à l'intérieur de l'alésage dudit corps.

On précisera aussi que les seconds moyens d'appui et de contre-appui pilotant le pivotement de l'organe de serrage vers sa position de serrage du manche de l'outil forment les moyens d'entraînement en rotation de l'organe.

Selon une autre caractéristique avantageuse de l'invention, les seconds moyens d'appui et de contre-appui forment des moyens de blocage positif de l'organe de serrage dans sa position de serrage du manche, ces moyens de blocage positif étant susceptibles de maintenir rigidement la bague par coincement dans sa position de serrage.

Par ailleurs, les seconds moyens d'appui de contre-appui comportent deux rampes formant came.

Mais d'autres caractéristiques et avantages de l'invention apparaîtront mieux à la lecture de la description détaillée qui suit, prise en référence aux dessins annexés qui sont donnés à titre d'exemple, et dans lesquels :
- la figure 1 représente une vue en coupe longitudinale d'une tête de pièce à main et d'un dispositif de blocage dans leur position de serrage selon un premier mode de réalisation de l'invention;
- la figure 2A est une vue en coupe faite selon la ligne IIA-IIA de la figure 1;
- la figure 2B est une vue en perspective d'une douille du dispositif selon l'invention, selon le mode de réalisation de la figure 1;
- la figure 2C est une vue en perspective sensiblement décalée d'un organe de serrage destiné à coopérer avec la douille de la figure 2B;
- la figure 3 est une vue en coupe partielle de la tête de la figure 1, représentant le dispositif selon l'invention dans sa position de détente;
- les figures 4, 7, 9 et 12 sont des vues essentiellement du dispositif de blocage dans sa position de blocage selon respectivement un second, un troisième, un quatrième et un cinquième mode de réalisation;
- les figures 6, 8, 11 et 14 sont respectivement des vues similaires aux figures 4, 7, 9 et 12 mais représentant le dispositif selon l'invention dans sa position de détente; et

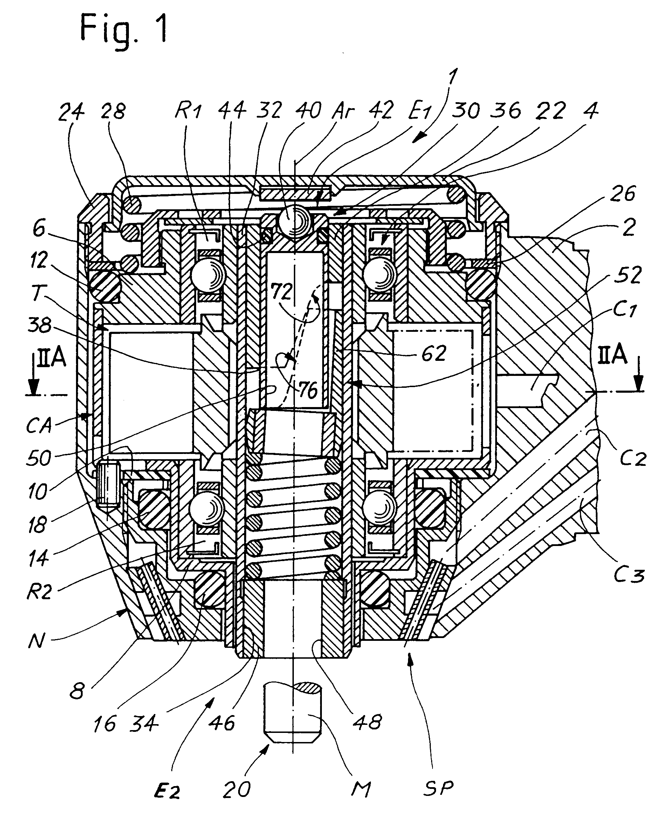

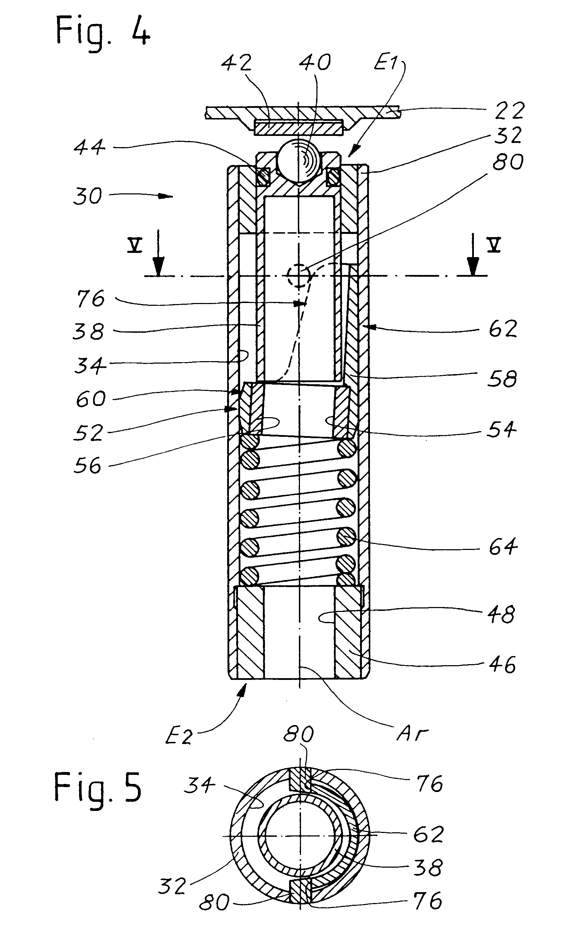

- les figures 5, 10 et 13 sont des vues en coupe transversale faites respectivement selon les figures V-V, X-X, XIII-XIII respectivement des figures 4, 9 et 12. En se référant aux figures 1, 2A, 2B, 2C et 3, on décrira ci-après une tête de pièce à main dentaire pourvue d'un dispositif de blocage selon un premier mode de réalisation de l'invention.

Comme on le voit plus particulièrement sur la figure 1, la tête 1 comporte un carter ou bâti 2 à l'intérieur duquel est monté libre en rotation un rotor 4 qui, dans cet exemple de réalisation, comporte une turbine à air T actionnée par un flux d'air moteur provenant d'un canal d'amenée C1. Ainsi, Le rotor 4 est susceptible de tourner à de très hautes vitesses, de l'ordre de 250.000 à 400.000 Tr/min (Rpm), autour d'un axe géométrique de rotation Ar formant un premier axe caractéristique de la tête 1. La tête 1 est conformée pour être montée sur un organe de préhension, non représenté, d'une pièce à main à usage dentaire.

Le rotor 4 est monté par l'intermédiaire de deux roulements R1 et R2 à l'intérieur d'une cartouche CA qui est constituée de deux cages respectivement supérieure 6 et inférieure 8, ces cages 6 et 8 étant chassées l'une dans l'autre. La cartouche CA est montée flottante à l'intérieur du bâti 2 de la tête 1 grâce à l'interposition d'une rondelle en élastomère 10 et de trois joints toriques ou "O-rings" respectivement 12, 14 et 16. La cartouche CA est bloquée en rotation par rapport au bâti 2 par l'intermédiaire d'une goupille d'arrêt 18.

La tête 1 présente à une première extrémité axiale un nez N à l'intérieur duquel est disposé un système SP de pulvérisation d'un mélange gaz-liquide véhiculé par des canaux C2 et C3. Ce mélange pulvérisé qui est dit mélange de "spray" est orienté vers un site de travail pour refroidir une partie traitée par un outil 20, dont uniquement le manche M a été ici représenté. Le système de pulvérisation SP n'étant pas l'objet de la présente invention, il ne sera pas décrit de façon détaillée.

A une seconde extrémité axiale de la tête 1 est disposé un bouton poussoir 22 qui est monté coulissant sur ladite tête à l'intérieur d'un chapeau 24 vissé dans le bâti 2. Le chapeau 24 appui sur le joint torique ou "O-ring" 12 avec interposition d'une bague annulaire 26 pour maintenir axialement la cartouche CA qui repose sur la rondelle en élastomère 10.

Le bouton poussoir 22 qui est sollicité axialement par un ressort hélicoïdal de compression 28 maintenu en appui sur la cage supérieure 6 de la cartouche flottante CA, peut se translater selon l'axe Ar pour venir piloter un dispositif 30 de blocage du manche M de l'outil 20.

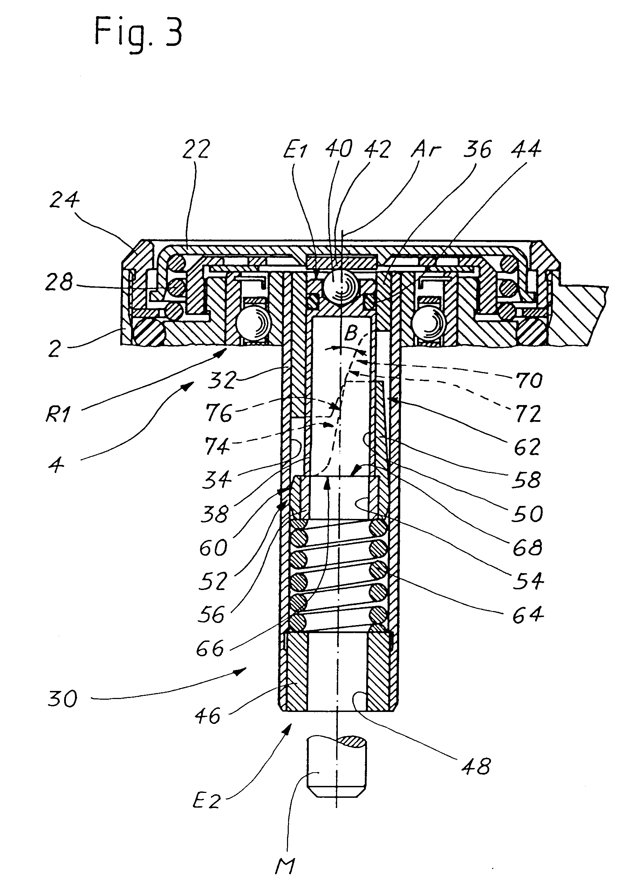

Comme on le voit sur la figure 3, le dispositif de blocage 30 comporte un arbre tubulaire 32 formant un corps à l'intérieur duquel est ménagé un alésage longitudinal débouchant 34. A l'intérieur de l'arbre tubulaire ou corps 32 et à une extrémité E1 du dispositif (la plus proche du bouton poussoir 22) est logée une douille tubulaire 36 qui est avantageusement montée à force par chassage dans l'alésage 34.

Le dispositif de blocage 30 comporte en outre une coulisse tubulaire 38 qui est logée dans la douille 36 et qui est susceptible de se translater librement à l'intérieur de celle-ci selon l'axe de rotation Ar. La coulisse 38 comporte au voisinage de l'extrémité E1 une bille 40 montée libre en rotation en regard du bouton poussoir 22 qui présente à cet effet une plaque d'appui 42 destinée à venir en contact axial avec la bille 40. On comprendra par la suite que cet agencement permet d'éviter la transmission au bouton poussoir 22 d'un mouvement de rotation susceptible d'être fournit par le rotor 4. La coulisse 38 est de plus pourvue d'un joint d'étanchéité 44 qui frotte sur la paroi interne non référencée de la douille 36. Ce joint 44 forme avantageusement un moyen de freinage de la coulisse 38 l'empêchant de venir buter de façon intempestive contre le bouton poussoir 22 lorsque la tête est manipulée.

A une seconde extrémité E2 du dispositif 30 est logée une bague de centrage 46 de même chassée ou soudée dans l'alésage 34. La seconde extrémité E2 fait sensiblement saillie du nez N (figure 1) de sorte que la bague de centrage 46 se trouve extérieurement accessible pour permettre l'introduction du manche M de l'outil à l'intérieur du dispositif de blocage 30. L'arbre tubulaire ou corps 32 s'étendant essentiellement sur toute la longueur du dispositif 30, les extrémités E1 et E2 constituent aussi des extrémités caractéristiques de cet arbre ou corps. Plus particulièrement, l'extrémité E2 forme une extrémité libre débouchante de celui-ci.

La bague de centrage 46 comporte un alésage cylindrique débouchant 48 conformé pour recevoir le manche M par l'intermédiaire d'un ajustement gras.

La coulisse tubulaire 38 comporte par ailleurs un logement cylindrique borgne 50 ouvert en direction de la seconde extrémité E2 qui forme comme précisé ci-dessus l'entrée du dispositif de blocage 30. Le logement borgne 50 est aussi conformé pour recevoir le manche M.

L'alésage 48 de la bague de centrage 46 et le logement borgne 50 de la coulisse 36 sont disposés de façon coaxiale à l'axe de rotation Ar du rotor 4.

On comprend donc que l'alésage 48 et le logement 50 forment un fourreau destiné à recevoir et à positionner le manche M de l'outil par rapport au corps ou arbre tubulaire 32 et selon l'axe de rotation Ar que l'on appellera aussi axe de travail.

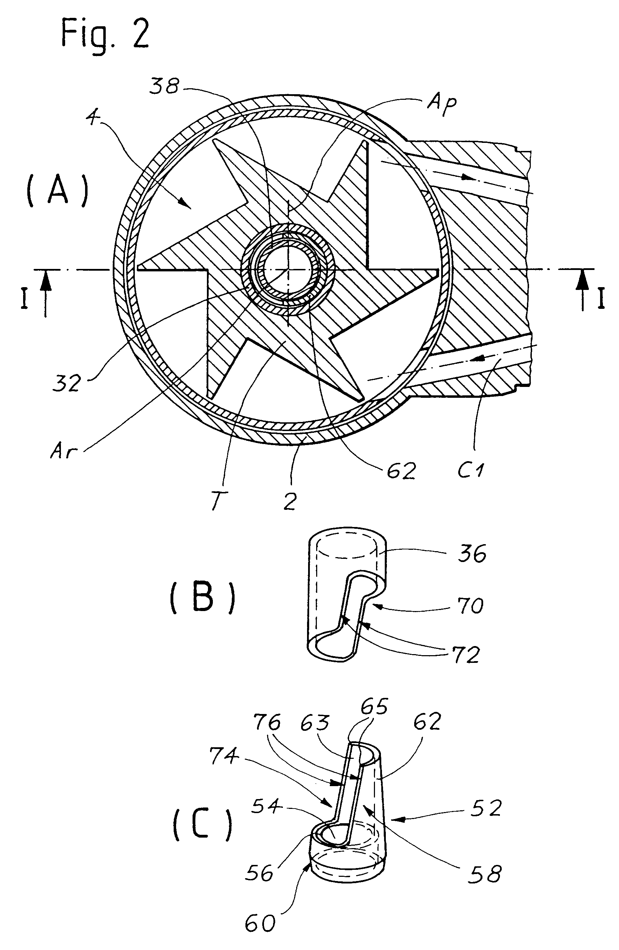

Comme on le voit plus particulièrement sur les figures 2C et 3, le dispositif de blocage 30 comporte de plus un organe de serrage 52 qui est susceptible de se déplacer à l'intérieur du corps 32. Cette organe de serrage 52 comporte un logement cylindrique débouchant 54 conformé pour recevoir et pour bloquer le manche M. Plus particulièrement, l'organe de serrage 52 se compose d'une bague intérieure 56 qui est réalisée en un matériaux dur, tel que du carbure de tungstène, et dans laquelle est ménagé directement le logement 54. La bague intérieure 56 est chassée ou soudée dans une enveloppe 58 logée directement dans le corps 32 et apte à se déplacer dans l'alésage 34. A cet effet, l'enveloppe 58 comporte au niveau de la bague 56 une forme extérieure partiellement sphérique oui constitue une rotule 60. On comprendra ci-après que cette rotule 60 forme des moyens de guidage permettant le pivotement de l'organe de serrage 52 autour d'au moins un axe de pivotement Ap (figure 2A) normal à l'axe de travail ou de rotation Ar.

L'organe de serrage 52 comporte de plus une jupe 62 venant de matière avec la rotule 60 et s'étendant axialement depuis la bague 56 vers la douille 36. La jupe 62 comporte une forme extérieure partiellement tronconique et un logement intérieur partiellement cylindrique 63 (figure 2C) celui-ci étant ouvert en direction de la douille 36 , tandis qu'il reçoit en partie la coulisse 38.

Comme on peut le voir sur la figure 1, la jupe 62 peut venir en appui contre la douille 36, tandis qu'elle est sollicitée axialement par des moyens de rappel constitués dans cet exemple par un ressort hélicoïdal de compression 64 qui est logé dans l'alésage 34 du corps 32 entre l'organe de serrage 52 et la bague de centrage 40. Plus particulièrement, le ressort 64 présente un diamètre intérieur, non référencé, permettant de laisser passer le manche M de l'outil, tandis qu'il repose axialement en bout sur la bague de centrage 46 et sur l'organe de serrage 52 qu'il sollicite intégralement.

On remarquera par ailleurs que la surface en bout 66 de l'extrémité libre de la coulisse 38 où s'ouvre le logement 50 peut venir en appui axial sur l'organe de serrage 52, et plus particulièrement sur un flanc latéral 68 de la bague 56. La surface annulaire 66 et le flanc 68 ont de préférence une forme plane.

La surface en bout 66 de la coulisse 38 et le flanc latéral 68 de la bague 56 forment des premiers moyens respectivement d'appui (66) et de contre-appui (68) associés à l'organe de serrage 52 pour piloter son pivotement vers une première position, dite de détente, représentée à la figure 3. On remarquera que dans cette position le logement 54 de l'organe de serrage 52 est orienté coaxialement à l'axe de travail ou axe de rotation Ar, si bien que le manche M de l'outil peut être introduit aisément dans le dispositif de blocage 30.

Dans l'exemple de réalisation représenté aux figures 1 à 3, La douille 36 comporte un dégagement 70 formé par un usinage diamétral. Ce dégagement 70 laisse apparaître sur la douille 36 deux bords d'épaisseur ou tranches 72 (figure 2B) qui forment deux rampes ayant chacune une fonction de came. En effet, la jupe 62 présente aussi un dégagement 74 formé de même par un usinage diamétral qui laisse aussi apparaître sur la jupe 62 deux bords d'épaisseur ou tranches 76. On notera que les bords d'épaisseur 72 et 76 sont constitués par des surfaces profilées s'étendant respectivement sensiblement selon la longueur de la douille 36 et selon la longueur de la jupe 62. Les deux bords d'épaisseur 76 de la jupe 62 sont disposés en regard des deux bords d'épaisseur correspondants 72 de la douille 36. Ainsi ces quatre bords peuvent venir en appui deux à deux en direction sensiblement radial par rapport à l'arbre 32. Plus particulièrement, l'extrémité libre de la jupe 62, au niveau des extrémités libres des bords ou tranches 76 formant des coins 65 peut venir glisser directement sur les deux rampes 72. On comprend donc que les bords d'épaisseur 76 de la jupe 62, au niveau de l'extrémité libre de cette jupe, ainsi que les deux rampes formant came 72 forment respectivement des seconds moyens d'appui 76 et de contre-appui 72 associés à l'organe de serrage 52 pour piloter son pivotement vers une seconde position, dite de serrage, représentée à la figure 1.

On précisera que les rampes 72 ont de préférence une forme de droite qui est inclinée par rapport à l'axe de travail Ar d'un angle B compris entre 5 et 50 degrés. L'angle B a une valeur de préférence voisine de 20 degrés.

La jupe 62 forme un bras de levier avec lequel les deux rampes 72 coopèrent pour permettre le pivotement de l'organe de serrage 52.

On remarquera que dans ce dispositif, les seconds moyens d'appui et de contre-appui respectivement 76 et 72 sont logés entre la coulisse 38 et l'arbre tubulaire ou corps 32. Les seconds moyens de contre-appui, en étant formés par les rampes 72 ménagées sur la douille 36, sont chassés à l'intérieur du corps 32.

De façon très avantageuse, les premiers 66,68 et les seconds 72,76 moyens d'appui et de contre-appui qui pilotent le pivotement de l'organe de serrage 52 vers ses deux positions respectivement de détente et de serrage sont logés intégralement dans le corps ou arbre tubulaire 32. Plus particulièrement, ces moyens sont logés essentiellement dans l'alésage 34, si bien qu'ils ne nécessitent aucune disposition dans l'arbre tubulaire 32 d'ouvertures susceptibles d'affaiblir sa résistance mécanique.

On comprend que l'arbre tubulaire 32 peut de ce fait être très avantageusement chassé, c'est-à-dire monté à force, à l'intérieur du rotor 4, et notamment à l'intérieur de la turbine T. De plus, on a prévu dans cet agencement un organe unique de serrage portant une seule bague de serrage, ce qui simplifie considérablement l'ajustage du dispositif.

Puisque l'arbre tubulaire ou corps 32 est lié fixement en rotation à la turbine T, il transmet à l'outil 20 le mouvement de rotation du rotor 4, via le dispositif de blocage 30.

Ainsi, le mouvement dans ce dispositif 30 est, selon une chaîne de liaison cinématique, transmis depuis la turbine T à l'arbre tubulaire 32 qui lui même entraîne la douille chassée 36 se trouvant en contact sensiblement radial, par ses bords d'épaisseur 72, avec les bords d'épaisseur correspondants 76 de la jupe 62. Ainsi, ces seconds moyens d'appui 76 et de contre-appui 72 tels qu'ils ont été décrits ci-avant transmettent aussi le mouvement de rotation du rotor 4 à l'outil 20 , via l'organe de serrage 52. Ces seconds moyens d'appui 76 et de contre-appui 72 forment donc en plus des moyens de transmission du mouvement de rotation depuis le corps 32 vers l'organe de serrage 52 et ils forment donc des moyens d'entraînement en rotation de cet organe.

Le fonctionnement du dispositif de blocage qui équipe la tête de pièce à main 1 selon l'invention est le suivant.

Pour permettre l'introduction du manche M de l'outil à l'intérieur du dispositif de blocage 30 et donc dans la tête 1, et comme cela est représenté à la figure 3, on presse, par exemple avec le pouce non représenté, le bouton poussoir 22 qui se déplace en direction de la coulisse 38 en comprimant le ressort de rappel 28.

La plaque d'appui 42 vient en contact avec la bille 40 de la coulisse 38 qui se translate vers le bas sur la figure 3 en direction de l'extrémité E2, c'est-à-dire vers l'intérieur du dispositif.La coulisse 38 vient donc appuyer en bout sur l'organe de serrage 52 et notamment sur la bague 56, par l'intermédiaire des premiers moyens d'appui et de contre-appui 66 et 68 décrits ci-avant.

Le ressort 64 se comprime et l'organe de serrage 52 se déplace dans l'arbre tubulaire 32 par un mouvement de pivotement normal à l'axe de rotation Ar conjugué à un mouvement de translation selon l'axe de rotation Ar. Le pivotement de l'organe de serrage se fait autour de l'axe de pivotement Ap qui se translate aussi selon l'axe Ar.

Progressivement, l'extrémité libre de la coulisse 38 vient en contact par sa surface plane en bout 66 (premier moyen d'appui) sur toute la surface plane correspondante 68 (premier moyen de contre-appui) de l'organe de serrage 52 et plus particulièrement de la bague 56.

L'alésage 54 de l'organe de serrage 52 après s'être déplacé, grâce à ce mouvement conjugué de pivotement et de translation, vient se positionner coaxialement à l'axe de travail ou de rotation Ar. On remarquera que ce mouvement est permis par la libération de la jupe 62 qui suit la rampe 72 s'ouvrant vers l'organe de serrage 52.

Dans la première position ou position de détente obtenue en fin de mouvement et conformément à la figure 3, le manche M peut être librement introduit dans la bague de centrage 46, puis dans la bague de serrage 56 et enfin dans le logement 50. Si le manche M de l'outil a déjà été introduit, il est alors libéré et il peut être sorti de la tête 1.

On comprend aussi que la coulisse 38 forme des moyens de commande du déplacement de l'organe de serrage 52 vers sa position de détente.

Lorsque le manche M est introduit dans le dispositif de blocage 30 et dans la tête 1, on relâche la pression initialement excercée sur le bouton poussoir 22 en laissant les deux ressorts de rappel 64 et 28 se détendre.

A ce moment là, la jupe 62 et plus particulièrement ses bords d'épaisseur 76 au niveau de leur extrémité libre, coulissent sur les deux rampes 72. La jupe 62 pénètre davantage dans le dégagement 70 de la douille rapportée 36 et en formant bras de levier, cette jupe fait pivoter de façon normal à l'axe Ar l'organe de serrage 52 et sa bague 56.

L'organe de serrage et ladite bague se mettent progressivement de biais dans l'alésage de l'arbre tubulaire 32 jusqu'à bloquer le manche M par arc-boutement.

Dans la position extrême représentée à la figure 1, on remarque que la jupe 62 est coincée entre les rampes 72 de la douille 36 et l'alésage 34 de l'arbre tubulaire 32.

Puisque le mouvement de pivotement de l'organe de serrage 52 dans un sens inverse, c'est-à-dire vers sa position de détente représentée à la figure 3 est empêché par les rampes 72 et par les bords d'épaisseur 76 de la jupe 62, on comprend que ces seconds moyens d'appui et de contre-appui 76,72 forment des moyens de blocage positif de l'organe de serrage dans sa position de serrage du manche M, ces moyens étant susceptibles de maintenir l'organe de serrage 52 par coincement et de façon rigide, notamment grâce à la douille 36 et à la jupe 62. Le ressort n'est donc pas le seul moyen de blocage de l'organe de serrage 52 et il n'est donc pas nécessaire de le surdimensionner.

On précisera ainsi que ce dispositif est auto-blocant car lors de la rotation du rotor 4, la jupe 62 sous l'action des forces centrifuges a tendance à faire d'avantage pivoter l'organe de serrage 52 vers sa position de blocage pour mieux maintenir l'outil. Ceci est permis grâce à la structure dissymétrique de la jupe 62.

On remarquera que ce dispositif peut être facilement démonté et nettoyé en enlevant le bouton poussoir 22 puis en tirant axialement la coulisse 38.

En se référant désormais aux figures 4 à 6, on décrira ci-après un dispositif de blocage selon un deuxième mode de réalisation de l'invention, dans lequel les éléments communs à ceux du mode de réalisation précédent ont été repérés avec les mêmes références numériques.

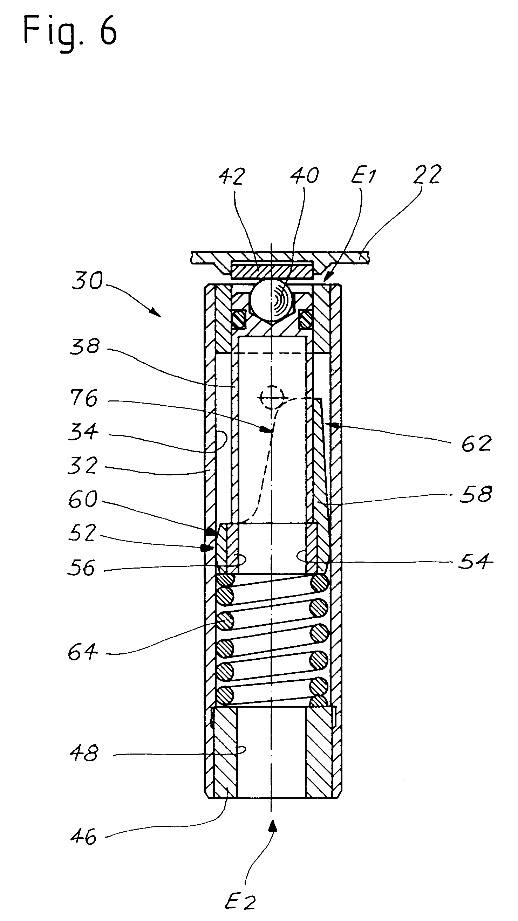

Dans ce mode de réalisation, les seconds moyens de contre-appui sont constitués par des axes 80 engagés à force radialement dans la paroi de l'arbre tubulaire ou corps 32. Les bords d'épaisseurs 76 de la jupe 62 de l'organe de serrage 52 reposent en appui contre le pourtour extérieur des axes 80. Ces bords d'épaisseur en coulissant sur les axes 80 constituent les rampes formant came dont la fonction a été décrite ci-avant. Les rampes formant came sont donc ici solidaires de l'organe de serrage 52. Le dispositif de blocage selon ce deuxième mode de réalisation est représenté dans ses deux positions extrêmes de serrage et de détente respectivement aux figures 4 et 6. Le fonctionnement de ce dispositif est analogue à celui du dispositif des figures précédentes et ne sera pas décrit de façon détaillée.

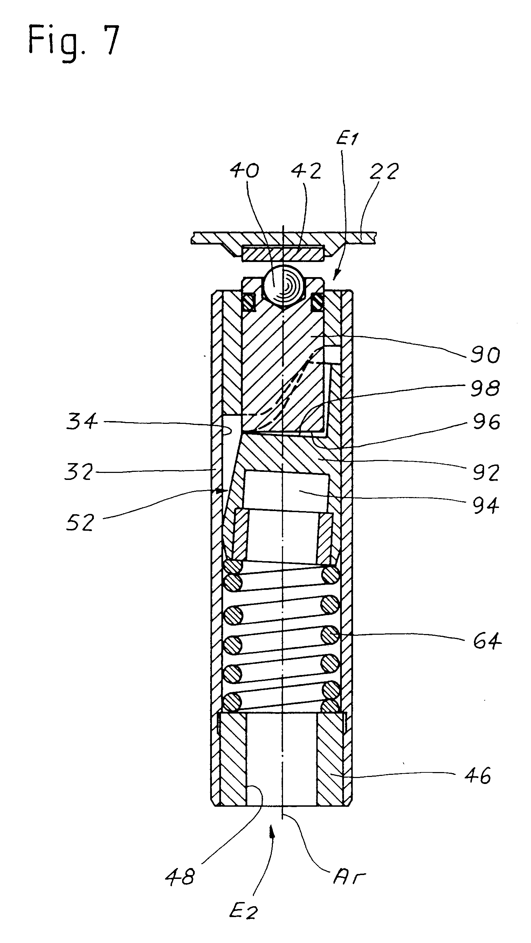

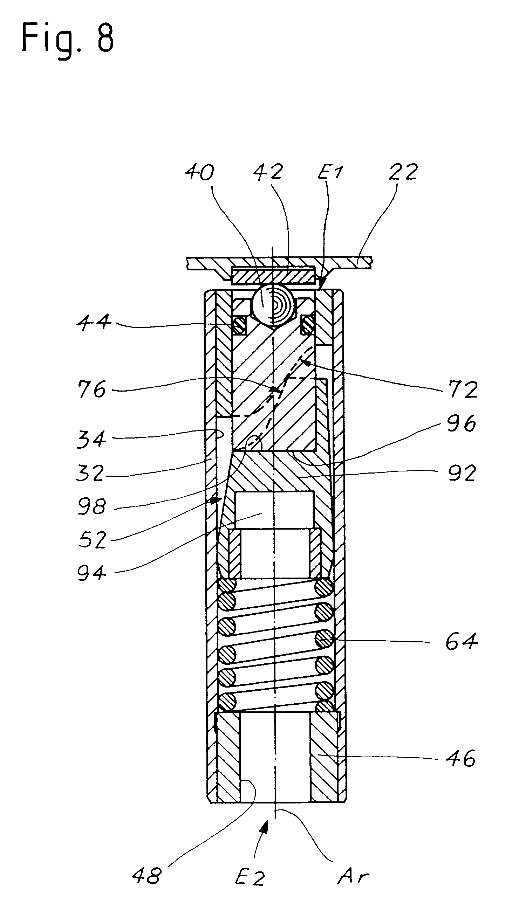

Les figures 7 et 8 représentent un troisième mode de réalisation du dispositif selon l'invention, dans lequel la coulisse 90 comporte une structure pleine dont la surface en bout 96 peut venir en appui sur toute sa section sur une surface pleine correspondante 98 ménagée sur l'enveloppe 92. La coulisse 90 est donc une pièce facile à usiner et beaucoup plus résistante à la compression. La coulisse peut de plus transmettre une pression plus importante. On remarquera qu'à cet effet, l'enveloppe 92 présente un logement borgne 94 destiné à recevoir l'extrémité libre du manche de l'outil, non représenté. Les surfaces 96 et 98 forment les premiers moyens respectivement d'appui et de contre-appui pilotant le pivotement de l'organe de serrage 52, et dont le fonctionnement a été précédemment décrit. Les autres composants du dispositif de ce troisième mode de réalisation sont identiques à ceux du mode de réalisation des figures 1 à 3.

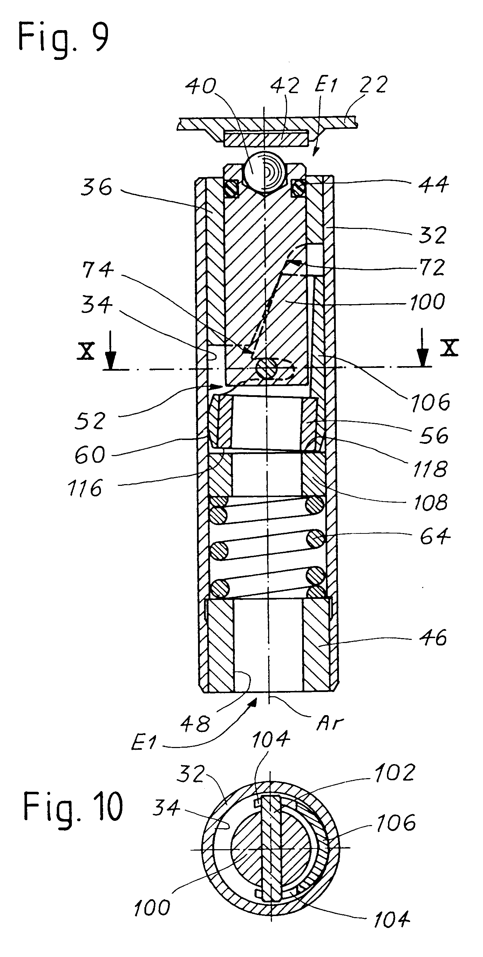

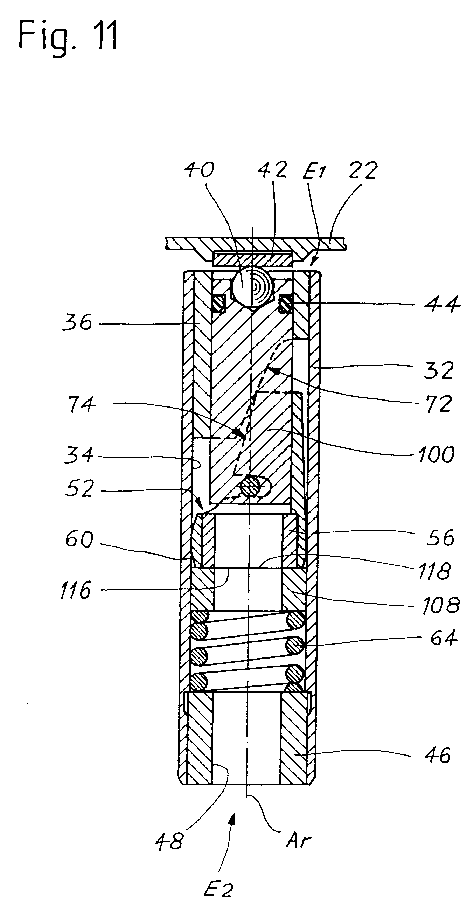

Les figures 9 à 11 représentent un quatrième mode de réalisation du dispositif de blocage selon l'invention. Dans ce mode de réalisation, la coulisse 100 a aussi une structure pleine et elle comporte un axe cylindrique diamétral 102 qui est engagé dans deux rainures oblongues 104 partiellement circulaires ménagées dans la paroi de la jupe 106 (figure 10). L'organe de serrage 52 est donc attelé à la coulisse 100.

Une troisième bague annulaire 108 est montée coulissante dans l'alésage 34 de l'arbre tubulaire 32 entre l'organe de serrage 52 et le ressort de rappel 64. Deux flancs latéraux 116 et 118 respectivement de l'organe de serrage 52 et de la troisième bague 108 forment respectivement les premiers moyens d'appui et de contre-appui pilotant le pivotement de l'organe de serrage vers sa position de détente.

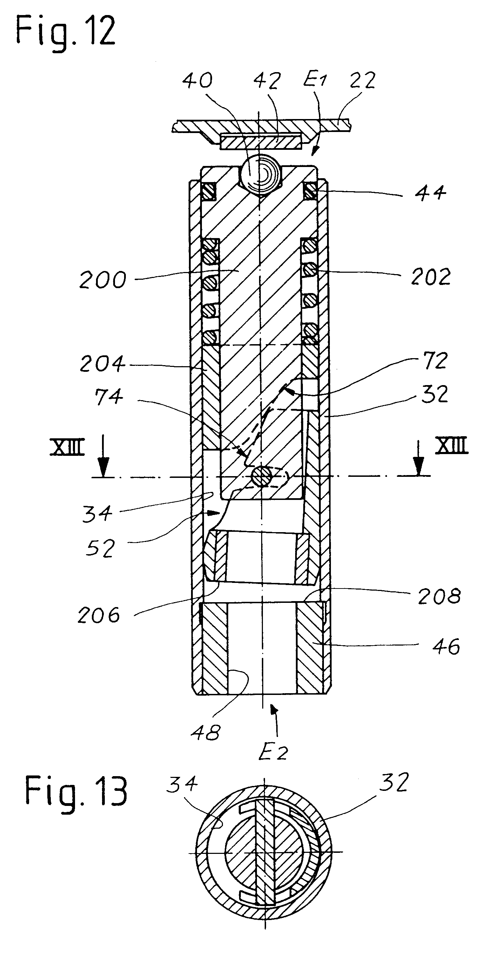

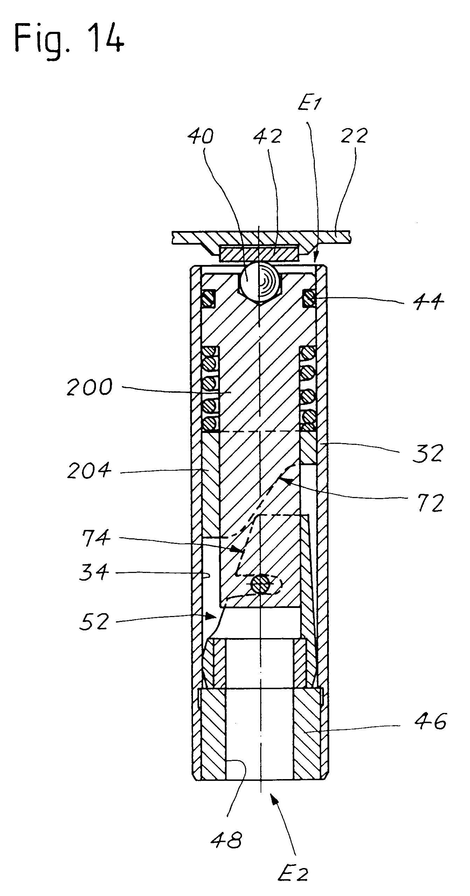

Les figures 12 à 14 représentent un cinquième mode de réalisation du dispositif selon l'invention dans lequel le ressort 202 permettant le rappel du mouvement de l'organe de serrage 52 est désormais disposé entre la coulisse 200 et la douille tubulaire 204 qui est chassée jusqu'au milieu de l'arbre tubulaire 32. Par ailleurs, les premiers moyens d'appui et de contre-appui sont constitués, comme on le voit sur les figures 12 et 14, respectivement par un flanc en bout inférieur 206 de l'organe de serrage 52 et par un flanc en bout supérieur 208 de la bague de centrage 46. L'organe de serrage 52 vient donc en appui directement contre la bague de centrage 46. On peut avec cet agencement bloquer des manches d'outil relativement courts.

## Revendications

1. Dispositif de blocage d'un manche d'outil, du type comprenant :
- un corps (32) comportant un alésage longitudinal (34),
- un fourreau (48,50) destiné à recevoir et à positionner le manche (M) de l'outil par rapport audit corps (32), selon un premier axe (Ar) dit axe de Travail,
- un organe de serrage (52) susceptible de se déplacer à l'intérieur dudit corps (32) , cet organe (52) comportant un logement (54) conformé pour recevoir et bloquer le manche (M) de l'outil,
- des moyens de guidage (60) pour permettre le pivotement de l'organe de serrage (52) autour d'au moins un deuxième axe (Ap), dit de pivotement, normal au premier (Ar) et entre deux positions, une première dite de détente dans laquelle ledit organe (52) peut recevoir et libérer ledit manche (M) et une deuxième, dite de serrage, dans laquelle cet organe (52) maintient fixement le manche (M) par arc-boutement,
- des moyens (72,76) d'entraînement associés audit organe de serrage (52) pour la transmission d'un mouvement, tel qu'un mouvement de rotation, depuis ledit corps (32) vers ledit organe (52).
- des premiers (66,58) et des seconds (76,72) moyens d'appui et de contre-appui associés audit organe (52) pour piloter son pivotement vers les deux positions respectivement de détente et de serrage du manche (M) ,
- des moyens (38) de commande du déplacement de l'organe de serrage (52) vers sa position de détente pour permettre la libération et l'introduction du manche (M) de l'outil à l'intérieur dudit fourreau (48,50), et
- des moyens de rappel agissant sur l'organe de serrage (52) pour le ramener vers sa position de serrage , caractérisé en ce que les premiers (66,58) et les seconds (76,72) moyens d'appui et de contre-appui sont logés intégralement à l'intérieur de l'alésage (34) dudit corps (32).

2. Dispositif selon la revendication 1, caractérisé en ce que les seconds moyens d'appui (76) et de contre-appui (72) pilotant le pivotement de l'organe de serrage (52) vers sa position de serrage du manche (M) de l'outil forment les moyens d'entraînement en rotation de l'organe (52).

3. Dispositif selon la revendication 1 ou 2, caractérisé en ce que les seconds moyens d'appui (76) et de contre-appui (72) forment des moyens de blocage positif de l'organe de serrage dans sa position de serrage du manche (M), ces moyens de blocage positif étant susceptibles de maintenir rigidement une bague (56) associée audit organe de serrage (52) par coincement dans sa position de serrage.

4. Dispositif selon l'une des revendications 1 à 3, caractérisé en ce que les seconds moyens d'appui (76) et de contre-appui (72) comportent deux rampes (72,76) formant came.

5. Dispositif selon la revendication 4, caractérisé en ce que lesdites rampes (72,76) coopèrent avec un bras de levier (62) solidaire de l'organe de serrage (52).

6. Dispositif selon la revendication 5, caractérisé en ce que ledit bras de levier (62) est constitué par une jupe de forme extérieure partiellement tronconique s'étendant axialement dudit organe de serrage (52).

7. Dispositif selon la revendication 6, caractérisé en ce que les seconds moyens d'appui (76) sont constitués par des bords d'épaisseur de ladite jupe (62).

8. Dispositif selon la revendication 7, caractérisé en ce que les seconds moyens de contre-appui (72) sont chassés à l'intérieur dudit corps (32).

9. Dispositif selon l'une des revendications 1 à 8, caractérisé en ce que les seconds moyens de contre-appui (72) comportent une douille (36) chassée dans l'alésage dudit corps (32).

10. Dispositif selon la revendication 4 et selon la revendication 9, caractérisé en ce que les deux rampes (72,76) formant came sont constituées par des bords d'épaisseur de ladite douille (36).

11. Dispositif selon la revendication 9 ou 10, caractérisé en ce que les moyens de commande du déplacement de l'organe de serrage (52) comportent une coulisse tubulaire (38) logée dans ladite douille (36) et susceptible de se translater à l'intérieur de celle-ci.

12. Dispositif selon la revendication 11, caractérisé en ce que les premiers moyens d'appui (66) et de contre-appui (68) pilotant le déplacement de l'organe de serrage (52) vers sa positon de détente sont constitués par des surfaces planes ménagées respectivement en bout sur ladite coulisse (38) et sur l'un des flancs de l'organe de serrage (52).

13. Dispositif de blocage d'un manche d'outil du type comprenant :
- un corps (32) par rapport auquel peut être positionné le manche (M) d'un outil, ce corps (32) comportant un alésage longitudinal (34),
- un organe de serrage (52) susceptible de serrer le manche de l'outil par arc-boutement en coopérant avec une coulisse de commande (38) et des moyens de rappel (64), caractérisé en ce qu'il comporte une douille tubulaire (36) chassée dans ledit corps et dont des bords d'épaisseur (72) constituent deux rampes formant came sur lesquelles viennent en appui des bords d'épaisseur correspondants (76) d'une jupe (62) extérieurement partiellement tronconique solidaire dudit organe de serrage (52) logé intégralement à l'intérieur de l'alésage (34) dudits corps (32).

14. Dispositif selon la revendication 13, caractérisé en ce que de ladite jupe (62) s'étend une enveloppe (58) dans laquelle est prévue une bague de serrage (56), cette enveloppe (58) formant au niveau de ladite bague (56) une rotule (60) susceptible de pivoter dans ledit alésage (34).

15. Dispositif selon la revendication 13, caractérisé en ce que la coulisse (38) est logée et peut se translater à l'intérieur de ladite douille (36).

16. Dispositif selon la revendication 15, caractérisé en ce que l'une des extrémités libres de la coulisse (38) qui est susceptible de venir en contact axial avec un flanc latéral (68) de la bague de serrage (56), vient progressivement lors de la libération ou de l'introduction du manche (M), en contact sur toute sa surface en bout (66) sur ledit flanc (68) de la bague (56).

17. Tête de pièce à main pourvue d'un dispositif de blocage selon l'une quelconque des revendications précédentes, et du type comportant un rotor (4) monté à l'intérieur d'un bâti (2), le corps (32) du dispositif de blocage étant constitué par un arbre tubulaire rapporté dans le rotor (4), caractérisée en ce que l'organe ou bague de blocage est logé intégralement à l'intérieur dudit arbre.

18. Tête selon la revendication 17, caractérisée en ce qu'elle ne comporte qu'une seule bague de blocage (56).

19. Tête selon la revendication 18, caractérisée en ce que ledit arbre tubulaire (32) est chassé dans le rotor (4).

20. Pièce à main dentaire équipée d'une tête selon l'une des revendications 17 à 19.

## Claims

1. Tool shaft blocking device, of the type comprising:
- a body (2) comprising a longitudinal bore (34);
- a quill (48, 50) intended to receive and to position the shaft (M) of the tool in relation to said body (32), along a first axis (Ar), called the Work axis;
- a gripping member (52) capable of moving inside said body (32), this member (52) comprising a recess (54) formed to be able to receive and to block the shaft (M) of the tool;
- guiding means (60) for enabling the gripping member (52) to pivot around at least a second axis (Ap), called the pivoting axis, perpendicular to the first (Ar) and between two positions, a first called the release position in which said member (52) can receive and release said shaft (M) and a second called the gripping position in which this member (52) holds the shaft (M) in a fixed position by jamming;
- driving means (72,76) used with said gripping member (52) for transmitting a movement such as a rotational movement, from said body (32) to said member (52);
- first (66,58) and second (76,72) supporting and counter-supporting means used with said member (52) to guide its pivoting towards the two positions of the shaft (M) respectively the release and gripping positions;
- means (38) for controlling the movement of the gripping member (52) towards its release position to enable the tool shaft (M) to be released and introduced inside said quill (48,50); and
- biaising means acting upon the gripping member (52) to bring it back towards its gripping position, characterized in that the first (66,58) and the second (76,72) supporting and counter-supporting means are completely housed inside the bore (34) of said body (32).

2. Device according to claim 1, characterized in that the second supporting means (76) and counter-supporting means (72) guiding the pivoting of the gripping member (52) towards its tool shaft (M) gripping position form the means for rotationally driving the member (52).

3. Device according to claims 1 or 2, characterized in that the second supporting means (76) and counter-supporting means (72) form means for positively blocking the gripping member in its shaft (M) gripping position, these positive blocking means being capable of rigidly holding a ring (56) used with said gripping member (52) by jamming in its gripping position.

4. Device according to one of claims 1 to 3, characterized in that the second supporting means (76) and counter-supporting means (72) comprise two cam ramps (72,76).

5. Device according to claim 4, characterized in that said ramps (72,76) cooperate with a lever arm (62) attached to the gripping member (52).

6. Device according to claim 5, characterized in that said lever arm (62) is formed by a skirt of partially truncated external shape extending axially from said gripping member (52).

7. Device according to claim 6, characterized in that the second supporting means (76) are formed by the thickness of the edges of said skirt (62).

8. Device according to claim 7, characterized in that the second counter-supporting means (72) are forced inside said body (32).

9. Device according to one of claims 1 to 8, characterized in that the second counter-supporting means (72) comprise a sleeve (36) forced into the bore of said body (32).

10. Device according to claim 4 and according to claim 9, characterized in that the two cam ramps (72,76) are formed by the thickness of the edges of said sleeve (36).

11. Device according to claims 9 or 10, characterized in that the means for controlling the movement of the gripping member (52) comprise a tubular slide-way (38) housed in said sleeve (36) and capable of sliding inside the latter.

12. Device according to claim 11, characterized in that the first supporting means (66) and counter-supporting means (68) guiding the movement of the gripping member (52) towards its release position are formed by flat surfaces arranged respectively at the end of said slide-way (38) and on one of the flanks of the gripping member (52).

13. Tool shaft blocking device of the type comprising:
- a body (32) in relation to which the shaft (M) of a tool may be positioned, this body (32) comprising a longitudinal bore (34);
- a gripping member (52) capable of gripping the tool shaft by jamming by cooperating with a control slide-way (38) and biaising means (64), characterized in that it comprises a tubular sleeve (36) forced into said body and whose thicknesses of the edges (72) constitute two cam ramps against which abut corresponding thicknesses of the edges of a skirt (62) of partially truncated external shape attached to said gripping member (52) which is completely housed inside the bore (34) of said body (32).

14. Device according to claim 13, characterized in that an envelope (58) extends from said skirt (62) in which a gripping ring (56) is provided, this envelope (58) forming an universal joint (60) at the level of said ring (56) capable of pivoting in said bore (34).

15. Device according to claim 13, characterized in that the slide-way (38) is housed and can slide inside said sleeve (36).

16. Device according to claim 15, characterized in that one of the free ends of the slide-way (38) which is capable of coming into axial contact with a lateral flank (68) of the gripping ring (56) gradually comes into contact over its entire end surface (66) on said flank (68) of the ring (56) when the sleeve (M) is released or introduced.

17. Handpiece head provided with a blocking device according to any one of the preceding claims, and of the type comprising a rotor (4) mounted inside a case (2), the body (32) of the blocking device being formed by a tubular shaft added on inside the rotor (4), characterized in that the blocking member or ring is completely housed inside said shaft.

18. Head according to claim 17, characterized in that it only comprises one blocking ring (56).

19. Head according to claim 18, characterized in that said tubular shaft (32) is forced into the rotor (4).

20. Dental handpiece provided with a head according to one of claims 17 to 19.

## Patentansprüche

1. Blockiervorrichtung eines Werkzeugsschaftes der Bauart, die umfaßt:
- einen Korpus (32) mit einer Längsbohrung (34),
- eine Hülse (48, 50), dazu bestimmt, den Schaft (M) des Werkzeugs aufzunehmen und relativ zu dem Korpus (32) gemäß einer ersten, als Arbeitsachse bezeichneten Achse (Ar) zu positionieren,
- ein Spannorgan (52), das im Inneren des Korpus (32) verlagerbar ist, welches Spannorgan (52) eine Ausnehmung (54) aufweist, angepaßt zur Aufnahme und Blockierung des Schafts (M) des Werkzeugs,
- Führungsmittel (60), die das Kippen des Spannorgans (52) um mindestens eine zweite, als Kippachse bezeichnete Achse (Ap), die senkrecht zur ersten (Ar) verläuft, zwischen zwei Positionen ermöglicht, von denen eine erste als Freigabeposition bezeichnet ist, in der das Organ (52) den Schaft (M) aufnehmen und freigeben kann, und einer zweiten, als Spannposition bezeichneten, in der das Organ (52) den Schaft (M) durch Verspreizen festhält,
- Mittel (72, 76) für den Antrieb, zugeordnet dem Spannorgan (52), für die Übertragung einer Bewegung, wie einer Drehbewegung, von dem Korpus (32) auf das Organ (52),
- erste (66, 58) und zweite (76, 72) Anschlag- und Gegenanschlagmittel, zugeordnet dem Organ (52), um dessen Kippen in die beiden Positionen, nämlich die Freigabe- bzw. die Spannposition des Schaftes (M), zu steuern,
- Mittel (38) für die Steuerung der Verlagerung des Spannorgans (52) in seine Freigabeposition zum Ermöglichen der Freisetzung und des Einführens des Schaftes (M) des Werkzeugs ins Innere der Hülse (48, 50), und
- Rückstellmittel, die auf das Spannorgan (52) einwirken, um es in seine Spannposition zurückzuführen,
dadurch gekennzeichnet, daß die ersten (66, 58) und die zweiten (76,72) Anschlag- bzw. Gegenanschlagmittel vollständig im Inneren der Bohrung (34) des Korpus (32) untergebracht sind.

2. Vorrichtung nach Anspruch 1, dadurch gekennzeichnet, daß die zweiten Anschlagmittel (76) bzw. Gegenanschlagmittel (72), die das Kippen des Spannorgans (52) in seine Spannposition des Schaftes (M) des Werkzeuges steuern, die Drehantriebsmittel des Organs (52) bilden.

3. Vorrichtung nach Anspruch 1 oder 2, dadurch gekennzeichnet, daß die zweiten Anschlagmittel (76) bzw. Gegenanschlagmittel (72) positive Blockiermittel des Spannorganes in seiner Spannposition des Schaftes (M) bilden, welche positiven Blockiermittel ausgebildet sind, um starr einen Ring (56), zugeordnet dem Spannorgan (52), klemmend in der Spannposition zu halten.

4. Vorrichtung nach einem der Ansprüche 1 bis 3, dadurch gekennzeichnet, daß die zweiten Anschlagmittel (76) bzw. Gegenanschlagmittel (72) zwei Rampen (72, 76) aufweisen, die eine Nockenbahn bilden.

5. Vorrichtung nach Anspruch 4, dadurch gekennzeichnet, daß die Rampen (72, 76) mit einem Hebelarm (62) zusammenwirken, der mit dem Spannorgan (52) verbunden ist.

6. Vorrichtung nach Anspruch 5, dadurch gekennzeichnet, daß der Hebelarm (62) von einer Schürze mit einer äußeren, teilweise kegelstumpfförmigen Form gebildet wird, die sich in Axialrichtung bezüglich des Spannorgans (52) erstreckt.

7. Vorrichtung nach Anspruch 6, dadurch gekennzeichnet, daß die zweiten Anschlagmittel (76) von den Rändern der Dicke der Schürze (62) gebildet sind.

8. Vorrichtung nach Anspruch 7, dadurch gekennzeichnet, daß die zweiten Gegenanschlagmittel (72) in das Innere des Korpus (32) eingetrieben sind.

9. Vorrichtung nach einem der Ansprüche 1 bis 8, dadurch gekennzeichnet, daß die zweiten Gegenanschlagmittel (72) eine in die Bohrung des Korpus (32) eingetriebene Manschette (36) umfassen.

10. Vorrichtung nach Anspruch 4 und Anspruch 9, dadurch gekennzeichnet, daß die beiden Rampen (72, 76), die die Nockenbahn bilden, von den dicken Rändern der Manschette (36) gebildet sind.

11. Vorrichtung nach Anspruch 9 oder 10, dadurch gekennzeichnet, daß die Steuermittel für die Verlagerung des Spannorgans (52) eine rohrförmige Kulisse (38) umfassen, eingefügt in die Manschette (36) und im Inneren desselben translatorisch verlagerbar.

12. Vorrichtung nach Anspruch 11, dadurch gekennzeichnet, daß die ersten Anschlagmittel (66) und die Gegenanschlagmittel (68), welche die Verlagerung des Spannorgans (52) in seine Freigabeposition steuern, von den ebenen Oberflächen gebildet sind, die jeweils am Ende der Kulisse (38) bzw. auf einer der Flanken des Spannorgans (52) ausgebildet sind.

13. Blockiervorrichtung eines Werkzeugschaftes der Bauart, die umfaßt:
- einen Korpus (32), relativ zu dem der Schaft (M) eines Werkzeuges positionierbar ist, welcher Korpus (32) eine Längsbohrung (34) aufweist,
- ein Spannorgan (52), das ausgebildet ist, um den Schaft des Werkzeuges durch Verkippen zu spannen, in Wirkverbindung mit einer Steuerkulisse (38) und Rückstellmitteln (64), dadurch gekennzeichnet, daß sie eine in den Korpus eingetriebene, rohrförmige Manschette (36) umfaßt, und deren Dickenränder (72) zwei Rampen bilden, die eine Nockenbahn bilden, auf der entsprechende Dickenränder (76) einer Schürze (62) zur Anlage gelangen, die äußerlich teilweise kegelstumpfförmig ist und verbunden ist mit dem Spannorgan (52), vollständig im Inneren der Bohrung (34) des Korpus (32) untergebracht.

14. Vorrichtung nach Anspruch 13, dadurch gekennzeichnet, daß sich von der Schürze (62) eine Hülle (58) erstreckt, in der ein Spannring (56) vorgesehen sind, welche Hülle (58) in Höhe des Ringes (56) ein Kugelgelenk (60) bildet, das in der Bohrung (34) kippbeweglich ist.

15. Vorrichtung nach Anspruch 13, dadurch gekennzeichnet, daß die Kulisse (38) im Inneren der Manschette (36) untergebracht ist und darin translatorisch beweglich ist.

16. Vorrichtung nach Anspruch 15, dadurch gekennzeichnet, daß eines der freien Enden der Kulisse (38), die in Axialkontakt mit einer Seitenflanke (68) des Spannringes (56) bringbar ist, progressiv in Richtung der Freigabe oder der Einführung des Schaftes (M) in Kontakt auf der Gesamtheit der im Anschlag befindlichen Oberfläche (66) auf der Flanke (68) des Ringes (56) bringbar ist.

17. Kopf eines Handstücks, versehen mit einer Blockiervorrichtung nach einem der vorangehenden Ansprüche, und der Bauart mit einem im Inneren eines Gehäuses (2) untergebrachten Rotor (4), wobei der Korpus (32) der Blockiervorrichtung von einer an dem Rotor (4) angebrachten rohrförmigen Welle gebildet wird, dadurch gekennzeichnet, daß das Organ oder der Blockierring vollständig im Inneren der Welle untergebracht ist.

18. Kopf nach Anspruch 17, dadurch gekennzeichnet, daß er nur einen einzigen Blockierring (56) umfaßt.

19. Kopf nach Anspruch 18, dadurch gekennzeichnet, daß die rohrförmige Welle (32) in den Rotor (4) eingetrieben ist.

20. Zahnärztliches Handstück, versehen mit einem Kopf gemäß einem der Ansprüche 17 bis 19.
